(19) Europäisches Patentamt
European Patent Office
Office européen des brevets

(11) **EP 2 278 261 A1**

(12) **DEMANDE DE BREVET EUROPEEN**

(43) Date de publication:
**26.01.2011 Bulletin 2011/04**

(21) Numéro de dépôt: **10169413.1**

(22) Date de dépôt: **13.07.2010**

(51) Int Cl.:
*G01B 5/00* (2006.01)   *G01B 5/02* (2006.01)
*G01B 5/08* (2006.01)   *G01B 21/10* (2006.01)

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**
Etats d'extension désignés:
**BA ME RS**

(30) Priorité: **15.07.2009 FR 0954877**

(71) Demandeurs:
• **Daudibon, Laurent**
  **92000 Nanterre (FR)**
• **Weymuller, Quentin**
  **25150 Dambelin (FR)**

• **Brisacier, Patrick**
  **78280 Guyancourt (FR)**

(72) Inventeurs:
• **Daudibon, Laurent**
  **92000 Nanterre (FR)**
• **Weymuller, Quentin**
  **25150 Dambelin (FR)**
• **Brisacier, Patrick**
  **78280 Guyancourt (FR)**

(74) Mandataire: **Marconnet, Sébastien et al**
  **SCHMIT CHRETIEN**
  **16, rue de la Paix**
  **75002 Paris (FR)**

(54) **Dispositif pour mesurer le développe d'une roue installée sur un véhicule et procédé associé**

(57) La présente invention concerne essentiellement un dispositif (10) pour mesurer un développé (D) d'une roue (1) installée sur un véhicule. Le dispositif (10) comporte des moyens (16) de fixation comportant au moins deux tiges (17.1, 17.2, 21) destinées à être en appui contre la périphérie interne de la jante (3) de la roue (1) pour assurer la fixation du dispositif (10) à la roue (1). Le dispositif (10) comporte également des moyens (28, 37) pour mesurer le développé (D) à partir de la position (h1, h2) par rapport au sol (5) des tiges (17.1, 17.2, 21). L'invention concerne également le procédé de mesure mettant en oeuvre ce dispositif.

Fig. 5

EP 2 278 261 A1

**Description**

**DISPOSITIF POUR MESURER LE DEVELOPPE D'UNE ROUE INSTALLEE SUR UN VEHICULE ET PROCEDE ASSOCIE**

La présente invention concerne un dispositif pour mesurer le développé d'une roue installée sur un véhicule ainsi que le procédé de mesure associé. Par développé d'une roue, on entend la distance parcourue par la roue lorsque celle-ci fait un tour en roulant sur le sol.

L'invention trouve une application particulièrement avantageuse, mais non exclusive, pour mesurer le développé d'une roue installée sur un camion. Toutefois, l'invention pourrait être mise en oeuvre pour mesurer le développé des roues de tout autre type de véhicule.

On note qu'il est utile de mesurer le développé d'une roue afin de renseigner un calculateur moteur qui pourra, en utilisant la vitesse angulaire de la roue indiquée par un tachymètre, déterminer la vitesse du véhicule en phase de roulage.

On connaît une méthode qui nécessite le déplacement du véhicule pour déterminer le développé de la roue du véhicule. Suivant cette méthode, on effectue une marque de peinture sur l'épaisseur du pneu puis on déplace le véhicule sur au moins un tour de roue. On détermine alors le développé de la roue en mesurant la distance au sol entre les marques de peinture, et en divisant s'il y a lieu par le nombre de tours de roue. Suivant une alternative de cette méthode, la marque sur les roues est remplacée par l'utilisation d'un capteur optique. Toutefois, on s'aperçoit que cette méthode est fastidieuse et longue à mettre en oeuvre.

On connaît aussi une méthode qui nécessite l'utilisation d'un banc à rouleaux, ce qui constitue un investissement lourd. Suivant cette méthode, les roues du train du véhicule dont on souhaite mesurer le développé sont positionnées sur les rouleaux du banc. Puis les roues sont mises en rotation par le banc afin de leur faire parcourir au moins un tour. Le développé de la roue est alors calculé à partir de l'angle parcouru par les rouleaux.

Il existe donc le besoin d'un dispositif simple permettant de mesurer le développé de la roue d'un véhicule immobile, de préférence moteur arrêté. Ce besoin est comblé par l'invention.

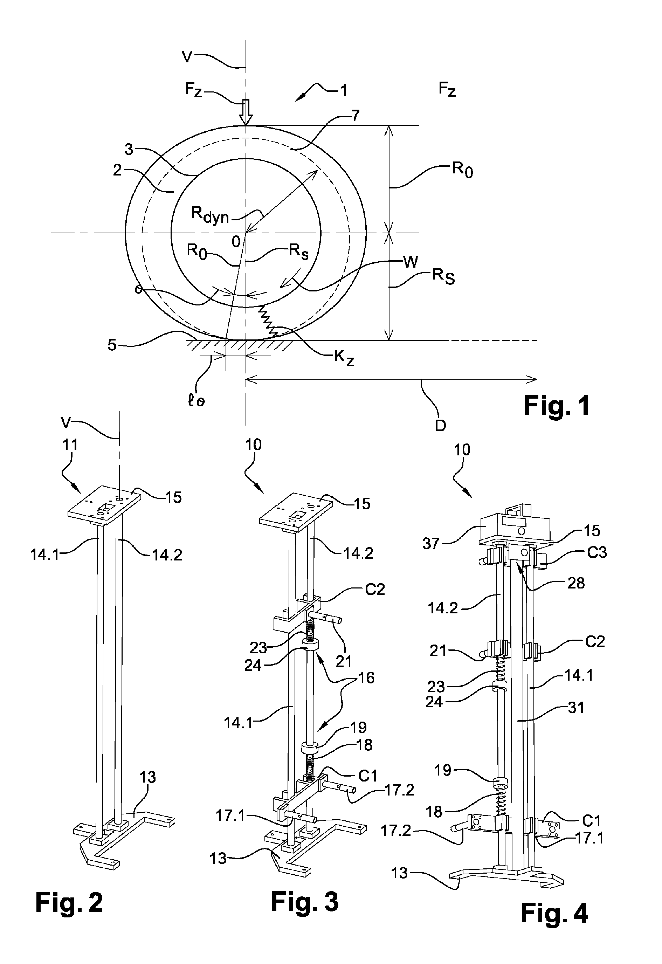

Plus précisément, l'invention part de la constatation que le pneu 2 de la roue 1 installé autour de la jante 3 montré sur la Figure 1 est déformé suivant une direction verticale V par un effort de contrainte $F_Z$ lié au poids du véhicule, la roue 1 opposant la raideur du pneu $K_Z$. La circonférence du pneu 2 n'est donc pas égale au développé de la roue 1 à vide (de rayon R0 dit rayon libre ou à vide), c'est-à-dire non contrainte par l'effort de contrainte $F_Z$. D'autre part, lorsque la roue 1 roule sur le sol 5, un glissement relatif entre le sol 5 et la roue 1 intervient.

Le principe de l'invention est de déterminer le rayon équivalent $R_{dyn}$ du cercle équivalent 7 dont le périmètre correspond au périmètre réel de la roue et, le cas échéant à des rapports de glissement près, au développé D de la roue 1. Ce rayon $R_{dyn}$ peut être calculé de plusieurs manières en fonction de la précision sur le développé D recherchée.

En première approximation, le rayon $R_{dyn}$ du cercle équivalent 7 peut être le rayon $R_S$ sous charge de la roue, c'est-à-dire le rayon contraint par l'effort $F_Z$ égal la hauteur entre l'axe O de rotation de la jante 3 et le sol 5. En deuxième approximation (plus précise), le rayon $R_{dyn}$ du cercle équivalent 7 est calculé en fonction du rayon sous charge $R_S$ et du rayon libre $R_0$.

Il est alors possible de mesurer le développé D de la roue 1 en calculant le périmètre du cercle 7 de rayon $R_{dyn}$ et le cas échéant en faisant intervenir un coefficient de frottement.

A cet effet, le dispositif selon l'invention dénommé « L-isoStatique » comporte un système de fixation associé à un bâti qui permet de fixer et de mettre en référence le dispositif selon l'invention par rapport à la roue. Le système de fixation est composé dans un exemple de deux ou trois tiges venant se mettre en place dans la lèvre de jante. Dans un exemple, les tiges sont associées à des chariots déplaçables verticalement le long de rails solidaires du bâti.

Par ailleurs, un système de mesure formé de préférence par un capteur de mesure unique permet de mesurer les distances nécessaires au calcul du développé. Le système de mesure est par exemple associé a un patin mobile le long d'une glissière verticale. De préférence, un interrupteur mécanique ou optique commande le déclenchement de la mesure aux positions recherchées.

Un système électronique permet en outre de calculer le développé de la roue à partir des mesures relevées par le système de mesure. Avantageusement, le système électronique prend également en charge l'interface homme-machine (IHM). Le système électronique est composé à cet effet d'une carte mère traitant les informations des périphériques (notamment du capteur de position), et d'un écran par exemple de type LCD réalisant l'IHM.

Ainsi en fonctionnement, le système de mesure relève les hauteurs des points caractéristiques par rapport au sol, correspondant respectivement aux hauteurs des tiges par rapport au sol. Le rayon de la roue sous charge et le cas échéant le rayon de la roue à vide peuvent alors facilement être calculés à partir des hauteurs de ces points pour déterminer le rayon équivalent de la roue.

A partir de la formule du rayon équivalent, il est possible de déduire simplement le développé de la roue qui est égal au périmètre du cercle équivalent, éventuellement à un coefficient de glissement près.

Plus généralement, on comprend que le principe de l'invention repose sur l'inscription d'un triangle à l'intérieur d'un cercle formé par la jante de la roue pour en déterminer le centre, le développé de la roue étant déterminé ensuite à partir de la position des sommets du triangle par rapport au sol. De préférence, le triangle inscrit à l'intérieur de la jante est un triangle isocèle ayant une base parallèle au sol, le développé de la roue étant alors déterminé à partir des hauteurs des sommets par rapport au sol.

Il est également possible de prendre en considération uniquement deux points à la périphérie de la jante formant un diamètre de la jante, de préférence le diamètre vertical de la jante, en utilisant uniquement deux tiges venant en appui contre la périphérie interne de la jante. Un tel positionnement des tiges permet de situer les hauteurs les points par rapport au centre du cercle et de déterminer le développé de la roue à partir des mesures des hauteurs des tiges par rapport au sol. Dans ce cas cependant, la mise en position du dispositif par rapport à la roue est plus difficile qu'avec un dispositif de fixation muni de trois tiges.

Bien entendu, il est également possible d'envisager des systèmes de fixation du dispositif à la roue comportant plus de trois tiges.

L'invention présente suivant la configuration choisie au moins un des avantages suivants :

- L'invention permet une mesure électronique automatique du développé d'une roue.
- L'invention ne nécessite pas de déplacement du véhicule lors du processus de mesure.
- L'invention est transportable manuellement par l'opérateur.
- L'invention se met en référence par rapport l'axe de rotation de la roue et le sol par l'intermédiaire d'un système de fixation sur la jante de la roue.
- Le principe de fixation selon l'invention s'adapte à tous les types et à toutes les tailles de roue.
- Le procédé pour mesurer le développé de la roue selon l'invention ne nécessite que très peu de prises de mesures (deux ou trois en fonction de la précision recherchée) pour aboutir à un résultat précis (mesure de la roue droite et gauche pour obtenir une moyenne du train).
- Le système de mesure selon l'invention permet, par une descente verticale du patin de mesure, de récupérer simplement les valeurs nécessaires pour le calcul du développé de la roue.
- Le système électronique selon l'invention permet d'assister le processus de mesure en centralisant les informations, en surveillant le processus, en guidant l'opérateur, en calculant et en affichant automatiquement le résultat.

L'invention concerne donc un dispositif pour mesurer un développé d'une roue installée sur un véhicule,

- la roue comportant une jante et un pneu positionné autour de la jante soumis à un effort vertical lié au poids du véhicule, caractérisé en ce qu'il comporte :
- des moyens de fixation comportant au moins deux tiges destinées à venir en appui contre la périphérie interne de la jante de la roue pour assurer la fixation du dispositif à la roue, et
- des moyens pour mesurer le développé à partir de la position par rapport au sol des tiges.

Selon une réalisation, les moyens de fixation comportent au moins trois tiges délimitant un triangle inscrit à l'intérieur de la périphérie interne de la jante, les moyens pour mesurer mesurant le développé à partir de la position par rapport au sol des tiges formant les sommets du triangle.

Selon une réalisation, le triangle délimité par les tiges est un triangle isocèle ayant une base destinée à être parallèle au sol.

Selon une réalisation, il comporte :

- un bâti comportant au moins un rail vertical,
- les moyens de fixation étant formés par au moins deux chariots sensiblement horizontaux aptes à coulisser le long du rail comportant respectivement une et deux tiges,
- un système de mesure pour mesurer la position des chariots par rapport au sol, et
- des moyens de calculs adapter pour calculer le développé de la roue à partir de la position mesurée des chariots par rapport au sol.

Selon une réalisation, il comporte en outre un troisième chariot comprenant une tige apte à reposer par gravité sur le haut du pneu de la roue, les moyens de calculs étant alors adaptés pour calculer le développé de la roue en tenant compte de la position dudit troisième chariot par rapport au sol.

Selon une réalisation, le système de mesure de la position des chariots est formé notamment par un capteur de position unique en relation avec un patin apte à coulisser le long d'une glissière verticale.

Selon une réalisation, le système de mesure comporte un interrupteur déclenchant la mesure de position lorsqu'il est activé par des plots solidaires des chariots.

Selon une réalisation, le premier chariot est associé à un moyen élastique, tel qu'un ressort, ayant tendance à repousser ledit premier chariot vers le bas lorsque le moyen élastique est compressé.

Selon une réalisation, le deuxième chariot est associé à un moyen élastique, tel qu'un ressort ayant tendance à repousser ledit deuxième chariot vers le haut lorsque le moyen élastique est compressé.

Selon une réalisation, le moyen de calcul comporte un microprocesseur, une mémoire de données, une mémoire de programmes et une interface homme-machine.

L'invention concerne en outre un procédé de mesure d'un développé d'une roue installée sur un véhicule mettant en oeuvre le dispositif selon l'invention, **caractérisé en ce que** pour mesurer le développé,

- on positionne les tiges des moyens de fixation en appui contre la périphérie interne de la jante de la roue pour assurer la fixation du dispositif à la roue, et
- on mesure le développé à partir de la position par rapport au sol des tiges.

Selon une mise en oeuvre, les tiges délimitant un triangle inscrit à l'intérieur de la périphérie interne de la jante, on mesure le développé à partir de la position par rapport au sol des tiges formant les sommets du triangle.

Selon une mise en oeuvre, pour mesurer le développé de la roue :

- on calcule un rayon équivalent correspondant au cercle dont le périmètre est égal au périmètre de la roue en fonction du rayon de la roue sous charge correspondant à la hauteur de l'axe de la roue par rapport au sol et le cas échéant du rayon libre de la roue suivant lequel la roue ne subit aucune contrainte, et
- on calcule le développé de la roue à partir du périmètre du cercle du rayon équivalent en faisant éventuellement intervenir un coefficient de glissement de la roue sur le sol.

Selon une mise en oeuvre, les moyens de fixation étant formé par un premier et un deuxième chariot portant respectivement une et deux tiges, on calcule le rayon de la roue sous charge à partir de la position du premier et du deuxième chariot par rapport au sol.

Selon une mise en oeuvre, le troisième chariot comprenant une tige reposant sur le haut du pneu de la roue, on mesure en outre le rayon libre de la roue à partir de la position du troisième chariot et du rayon sous charge.

L'invention sera mieux comprise à la lecture de la description qui suit et à l'examen des figures qui l'accompagnent. Ces figures ne sont données qu'à titre illustratif mais nullement limitatif de l'invention. Elles montrent :

Figure 1 (déjà décrite) : une représentation schématique d'une roue installée sur un véhicule qui subit une déformation liée au poids du véhicule ;

Figure 2 : une vue en trois dimensions du bâti du dispositif de mesure selon l'invention ;

Figure 3 : une vue en trois dimensions du système de fixation à la roue du dispositif selon l'invention installé sur le bâti de la Figure 2 ;

Figure 4 : une vue en trois dimensions d'un dispositif de mesure selon l'invention vu de dos ;

Figure 5 : une représentation schématique d'une vue de face d'un dispositif selon l'invention fixé sur une roue faisant apparaître des dimensions intervenant dans un calcul du développé de la roue ainsi que le système électronique mettant en oeuvre le procédé selon l'invention ;

Figure 6 : une représentation schématique du dispositif selon l'invention vu de dos faisant apparaître la glissière le long de laquelle le patin portant le capteur de mesure peut coulisser ;

Figure 7 : des représentations schématiques de l'interrupteur sous forme mécanique qui déclenche la prise de mesure du capteur de mesure ;

Figures 8a et 8b : respectivement une vue du dispositif de mesure selon l'invention positionné contre un outil d'étalonnage et les positions occupées par les chariots lors de la phase d'étalonnage ;

Figure 9 : une représentation en trois dimensions d'un dispositif selon l'invention monté sur une roue en cours d'utilisation par un opérateur ;

Les éléments identiques conservent la même référence d'une figure à l'autre.

Les Figures 2 à 4 montrent un dispositif 10 de mesure selon l'invention destiné à mesurer le développé de la roue 1 installée sur un véhicule (non représenté) subissant une contrainte verticale $F_Z$ liée au poids du véhicule. Cette roue 1 est formée de la jante 3 autour de laquelle est positionné le pneu 2. La jante 3 est considérée comme centrée sur l'axe O de rotation de la roue 1.

Le dispositif 10 comporte un bâti 11 formé par une base 13 horizontale destinée à réaliser la liaison du dispositif 10 avec le sol 5. Deux rails 14.1-14.2 solidaires de la base 13 s'étendent verticalement suivant une direction verticale V perpendiculaire à la base 13 et sont reliés entre eux à leur extrémité supérieure par l'intermédiaire d'un support 15.

Le dispositif 10 comporte en outre des moyens 16 de fixation permettant de fixer le dispositif 10 à la roue 1 au moyen de tiges décrivant un triangle à l'intérieur de la jante 3. Ces moyens 16 de fixation sont formés ici par un premier C1 et un deuxième C2 chariots horizontaux pouvant coulisser le long des rails 14.1 et 14.2.

Le premier chariot C1 horizontal comporte deux tiges 17.1 et 17.2 à ses deux extrémités qui s'étendent sensiblement perpendiculairement au plan passant par les deux rails 14.1, 14.2 et donc au plan de la roue 1. Un moyen élastique, par exemple un ressort 18, est installé autour d'un des rails 14.2 entre le chariot C1 et une butée 19 fixée au rail 14.2 située au dessus du chariot C1, ce ressort 18 ayant tendance à pousser le chariot C1 vers le sol 5 lorsqu'il est comprimé.

Le deuxième chariot C2 horizontal comporte une tige 21 qui s'étend sensiblement perpendiculairement au plan passant par les deux rails 14.1, 14.2 et donc au plan de la roue 1. Un moyen élastique, par exemple un ressort 23, est installé autour d'au moins un rail 14.2 entre le chariot C2 et une butée 24 fixée au rail 14.2 située en dessous du chariot C2, ce ressort 23 ayant tendance à pousser le deuxième chariot C2 vers le haut lorsqu'il est comprimé.

Au repos, on remarque que la distance verticale entre le premier et le deuxième chariot C1, C2 est au moins égale au rayon de la jante 3 de la roue 1 dont on souhaite mesurer le développé.

Alternativement, le premier chariot C1 comporte une seule tige 21 tandis que le deuxième chariot C2 comporte deux tiges 14.1, 14.2. Dans une variante, le système 16 de fixation est formé par des bras mobiles portant chacun une tige à leur extrémité reliés à un point correspondant sensiblement à l'axe O de la roue 1, de sorte que lorsque les bras sont en position dépliée (position éloignée de l'axe), les tiges entrent en contact avec la périphérie interne de la jante 3 pour décrire un triangle inscrit et fixer le dispositif 10 à la roue 1.

Avantageusement, le dispositif 10 comporte en outre un troisième chariot C3 positionné au dessus du deuxième chariot C2 présentant une tige 26 de diamètre $r_1$ à une de ses extrémités, cette tige 26 étant destinée à reposer sur la périphérie extérieure du pneu 2.

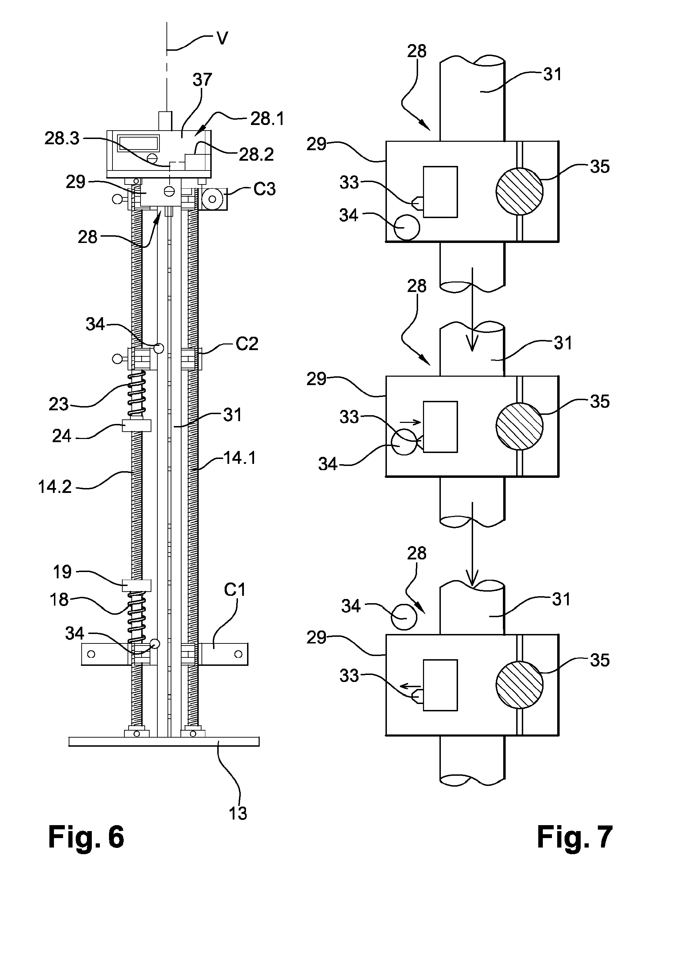

Par ailleurs, le dispositif 10 est équipé d'un système 28 de mesure comportant un capteur 28.1 de position unique installé sur un patin 29 apte à coulisser à l'intérieur d'une glissière 31 verticale positionnée au dos du dispositif 10. Comme montré sur les Figures 6 et 7, le système 28 de mesure comporte en outre un interrupteur 33 monté sur ressort utilisé en association avec des plots 34 fixés à chaque chariot C1-C3.

Cet interrupteur 33 ne déclenche pas de mesure lorsqu'il est en position sortie (au repos) mais déclenche une mesure de hauteur lorsqu'il est enfoncé par une force extérieure. Ainsi, comme montré sur la Figure 7, il est possible de déterminer la position des trois chariots C1-C3 en déplaçant le patin 29 sur toute la longueur de la glissière 31, le plot 34 de chaque chariot C1-C3 déclenchant la mesure du capteur en enfonçant l'interrupteur 33 lorsque ce dernier passe à proximité d'un plot 34. De préférence, pour faciliter sa préhension, le patin 29 coulissant est équipé d'une poignée 35 que l'opérateur pourra saisir pour déplacer le patin 29 le long de la glissière 31. En variante, le déplacement du patin 29 est effectué automatiquement à l'aide de moyens motorisés.

De préférence, comme montré sur la Figure 6, le capteur 28.1 de position utilisé est un capteur de type codeur à câble composé d'une unité fixe 28.2 installée à l'intérieur du boîtier du système 37 électronique décrit ci-dessous, et d'un câble 28.3 ayant une de ses extrémité reliée au patin 29 et l'autre extrémité reliée à une bobine associée à l'unité fixe 28.2, de manière à pouvoir être embobiné et rembobiné lors du déplacement du patin 29. La position du chariot C1-C3 est alors déterminée en fonction du nombre de tours parcouru par la bobine au moment de la prise de mesure déclenchée par le plot 34. Le rembobinage du câble 28.3 est effectué de manière automatique par l'unité fixe 28.2 lorsque l'opérateur remonte le patin 29 vers le support 15. En variante, tout autre type de capteur de position connu pourrait être utilisé dans l'invention.

Alternativement, chaque chariot C1-C3 est équipé d'un capteur de position. Toutefois une telle réalisation serait plus coûteuse qu'un système 28 de mesure à capteur de position unique.

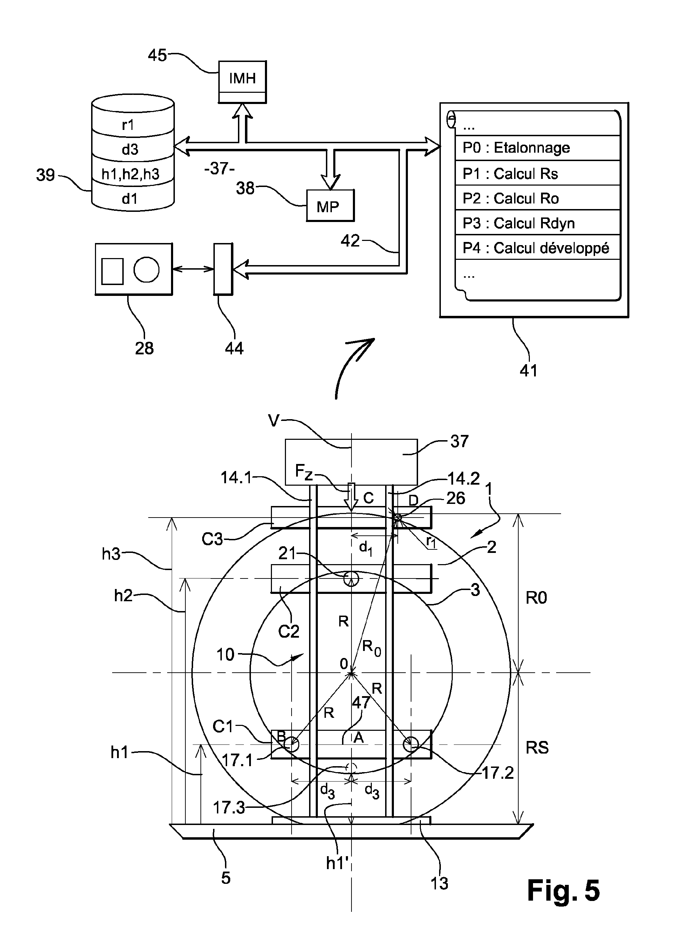

Le dispositif 10 comporte également un système 37 électronique installé sur le support 15 du bâti 11. Comme montré sur la Figure 5, ce système 37 est muni d'un microprocesseur 38, d'une mémoire 39 de données et d'une mémoire 41 de programmes reliés entre eux par l'intermédiaire d'un bus 42 de communication. Le microcontrôleur 37 comporte également une interface 44 entrée-sortie permettant de mettre en relation le microprocesseur 38 avec le système 28 de mesure ainsi qu'une interface 45 homme-machine, formée par exemple par un écran combiné à un clavier ou un écran tactile.

En fonctionnement, l'opérateur positionne la base 13 du bâti sur le sol 5 à proximité de la roue 1. L'opérateur introduit ensuite les trois tiges 17.1, 17.2 et 21 à l'intérieur de la jante 3 en soulevant le premier chariot C1 vers le haut et en poussant le deuxième chariot C2 vers le bas, puis relâche les chariots C1 et C2, de sorte que les tiges 17.1, 17.2, et 21 viennent se plaquer contre la périphérie intérieure de la jante 3, les trois tiges 17.1-17.2 et 21 décrivant ainsi un triangle inscrit à l'intérieur de la jante 3. La distance entre l'axe O de la roue 1 et les tiges 17.1-17.2 et 21 est alors sensiblement égal au rayon R de la jante 3.

Le triangle formé par les tiges 17.1, 17.2 et 21 est de préférence un triangle isocèle ayant une base 47 parallèle au sol 5 et un sommet qui se situe sensiblement à l'intersection de la verticale V et du cercle décrit par la jante 3. En fixant ainsi le dispositif 10 sur la jante 3, l'opérateur le met en référence par rapport au sol 5 et à l'axe O de rotation de la roue 1.

Le troisième chariot C3 est alors positionné, de sorte que la tige 26 qu'il porte entre en contact par gravité sur la périphérie extérieure du pneu 2 de la roue 1. La distance entre l'axe O de la roue 1 et le centre de la tige 26 est alors sensiblement égal au rayon libre $R_0$ de la roue 1 qui ne subit pas la contrainte du poids du véhicule.

On déplace alors le système 28 de mesure le long de la glissière 31, de sorte que les hauteurs $h_1$, $h_2$ et $h_3$ respectives des chariots C1, C2 et C3 par rapport au sol 5 mesurées par le capteur sont stockées dans la mémoire 39 de données via l'interface 44 d'entrées/sorties relié au dispositif 28 de mesure.

Par ailleurs, les dimensions du dispositif 10 étant précisément connues a priori, la distance $d_3$ entre le milieu A du segment délimité par les tiges 17.1 et 17.2 du chariot C1 et une des tiges 17.1, 17.2 est connue et stockée dans la mémoire 39 de données. La distance $d_1$ entre le centre D de la tige 26 et le point C situé sensiblement à l'intersection entre la verticale V et la périphérie externe du pneu 2 (correspondant sensiblement au milieu du chariot C3) est également connue et stockée dans la mémoire 39 de données. Le rayon $r_1$ de la tige 26 portée par le troisième chariot C3 est également connu et préalablement stocké dans la mémoire 39 de données.

Le microprocesseur 38 exécute alors un programme P1 permettant de déterminer le rayon $R_S$ sous charge suivant lequel le pneu 2 subit l'effort $F_Z$, correspondant à la distance mesurée suivant la verticale V entre l'axe O de la roue 3 et le sol 5. L'algorithme du programme P1 est basé sur le fait que le triangle OAB rectangle en A ayant comme sommet le centre O de la jante 3, le point B constitué par une des tiges 17.1, 17.2 du chariot C1 et le point A qui est le centre du segment qui s'étend entre les deux tiges 17.1 et 17.2, présente des côtés vérifiant la relation suivante :
$R^2 = d_3^2 + (R_S - h1)^2$,
Etant donné que $h_2 = R_S + R$, Le programme exécute donc l'algorithme suivant pour déterminer $R_S$ :
$R_S = (h_2^2 - h_1^2 - d_3^2) / [2(h_2 - h_1)]$.

Le microprocesseur 38 exécute également un programme P2 permettant de calculer le rayon $R_0$ non contraint par l'effort $F_Z$ de contrainte. L'algorithme du programme P2 est basé sur le fait que le triangle OCD rectangle en C ayant comme sommets le centre O de la roue 1, le point D formé par le centre de la tige 26 du troisième chariot C3 et le point C correspondant à l'intersection entre la verticale V et la périphérie externe supérieure du pneu 2, présente des côtés vérifiant la relation suivante :
$(R_0 + r_1)^2 = d_1^2 + (h_3 - R_S)^2$, Le programme P2 exécute donc l'algorithme suivant pour déterminer R0 :
$R_0 = \sqrt{(d_1^2 + (h_3 - R_S)^2)} - r_1$.

Alternativement, le rayon $R_0$ peut être déduit directement à partir de la mesure $h_3$ de la hauteur du chariot C3 par rapport au sol 5, $R_0$ valant $h_3 - R_S$. En variante, le rayon $R_0$ libre est considéré comme étant une valeur standard préalablement stockée dans la mémoire de données 29, une corrélation étant alors établie entre le type de roue 1 dont on souhaite mesurer le développé D et le rayon $R_0$ libre standard correspondant.

Une fois les rayons $R_0$ et $R_S$ calculés, le microprocesseur 38 exécute le programme P3 permettant de calculer le rayon $R_{dyn}$ correspondant au cercle 7 dont le périmètre correspond au périmètre réel de la roue 1 déformée par l'effort de contrainte $F_Z$ lié au poids du véhicule.

L'algorithme du programme P3 est basé sur le fait que, comme montré sur la Figure 1, le rayon sous charge $R_S$ est soumis à la force verticale $F_Z$ correspondant à une partie du poids du véhicule et oppose la raideur du pneu $K_Z$ soit $R_S = R_0 - (F_Z / K_Z)$. En situation de roulage, le pneumatique se déforme constamment sous les variations de la charge et du profil de la route, le rayon dynamique $R_{dyn}$ est donc variable. Le rayon dynamique $R_{dyn}$ peut donc être exprimé par rapport à la vitesse de la roue $V_{roue}$ d'un point de la circonférence du pneumatique, du glissement Gi et de la vitesse de rotation de la roue W suivant la relation :

$$R_{dyn} = (V_{roue} \times Gi) / W$$

Le rayon dynamique $R_{dyn}$ peut également être calculé à partir des rayons statiques $R_0$ et $R_S$ de la manière suivante :

$$\Theta = \cos^{-1}(R_S/R_0),$$

$\theta$ étant, comme représenté sur la Figure 1, l'angle qui intercepte la moitié de la portion du pneu 2 au sol 5 déformé par l'effort de contrainte $F_Z$.
En outre $I_\theta = \sin\theta * R_0$,
$I_\theta$ correspondant à la moitié de la longueur de la portion du pneu 2 au sol déformé par l'effort $F_Z$ de contrainte.
Le programme P3 exécute donc l'algorithme suivant pour calculer le rayon dynamique $R_{dyn}$ :

$$R_{dyn} = l_{\theta}/\theta = R_0 * [\sin [\cos^{-1} (R_S/R_0)]] / \cos^{-1} (R_S/R_0)$$

On remarque que le rayon dynamique $R_{dyn}$ ainsi calculé est inférieur au rayon libre $R_0$ et supérieur au rayon sous charge $R_S$.

Le microprocesseur 38 exécute alors le programme P4 permettant de déduire le développé D de la roue 1 basé sur l'algorithme suivant :

$$D= R_{dyn} \text{ x } Gi \text{ x } 2\pi,$$

Gi étant un coefficient de glissement qui varie selon des critères extérieurs comme la nature du revêtement, l'humidité, la température compris entre environ plus ou moins 1 %.

En variante, dans une réalisation simplifiée, on supprime le troisième chariot C3, le calculateur 37 déterminant alors uniquement le rayon sous charge $R_S$ et l'assimile au rayon dynamique $R_{dyn}$. On détermine alors le développé D de la roue 1 à partir du périmètre du cercle de rayon $R_S$ en faisant ou non intervenir de coefficient Gi de glissement de la roue 1 par rapport au sol 5.

En variante, on utilise un système 16 de fixation comportant uniquement deux tiges 17.3 et 21 installées chacune sur un chariot ou un bras dépliable venant en appui contre la périphérie interne de la jante 3 suivant un diamètre vertical de la jante 3. La tige 17.3 étant à une distance h1' par rapport au sol et la tige 21 étant à la distance h2 par rapport au sol, on a alors
$h_2 - h_1' = 2R$, et
$R_S = R + h_1'$

De sorte que le microprocesseur 38 peut alors exécuter l'algorithme suivant pour déterminer le rayon $R_S$ sous charge :

$$R_S = [(h_2 - h_1')/2] + h_1'$$

Le développé D est alors uniquement déterminé à partir du rayon $R_S$ sous charge en calculant le périmètre du cercle de rayon $R_S$ ($R_S$ étant alors assimilé à $R_{dyn}$) et en faisant intervenir s'il y a lieu le coefficient Gi de glissement comme expliqué précédemment. Alternativement, comme précédemment, le développé D peut être déterminé en fonction de $R_0$ et $R_S$ si on utilise le troisième chariot C3 positionné sur le haut du pneu 2 pour calculer $R_0$.

Préalablement à la mesure du développé de la roue 1, le microprocesseur 38 exécute de préférence un programme P0 de calibration afin de calibrer le dispositif 28 de mesure en déterminant les coefficients propres à chaque chariot C1, C2 et le cas échéant C3.

A cet effet, le dispositif 10 est mis en référence par rapport à un marbre 46 comportant une pièce 48 verticale et une pièce 49 horizontale en formant un L. Ensuite le dispositif 10 est positionné dans une position Pi, dans laquelle chaque chariot C1-C3 présente une position qui lui est propre différente de celle des autres chariots.

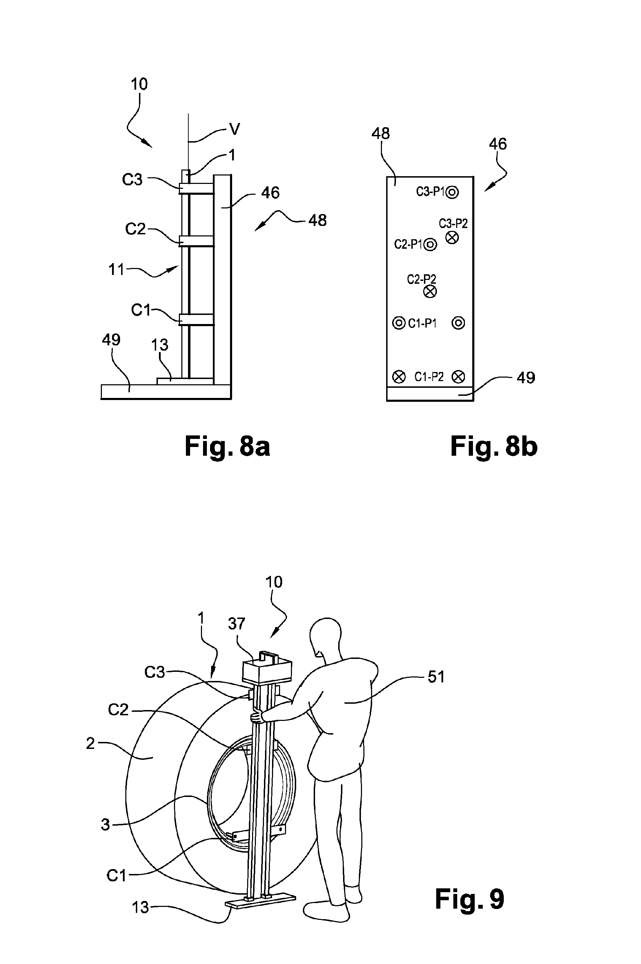

Ainsi, dans une première position P1, le premier chariot C1, le deuxième chariot C2, le troisième chariot C3 sont positionnés respectivement dans la position C1_P1réel, C2_P1réel, et C3_P1réel représentées par des ronds sur la Figure 8b. Les coordonnées réelles de ces positions sont connues. On effectue ensuite une prise de mesure de la position P1 des chariots C1-C3 au moyen du dispositif 28 de mesure, afin d'obtenir les valeurs mesurées de la position P1 des trois chariots C1_P1mes, C2_P1 mes, et C3_P1 mes.

On place ensuite le dispositif 10 dans la position P2 du marbre dont les coordonnées réelles (C1_P2réel, C2_P2réel, C3_P2réel) des positions des chariots C1-C3 représentées par des croix sont connues. On effectue ensuite une prise de mesure par le dispositif 10 de la position P2 des chariots C1-C3 afin d'obtenir les valeurs mesurées de la position P2 des trois chariots : C1_P2mes, C2_P2mes, C3_P2mes.

Le microprocesseur détermine alors la relation affine liant la hauteur mesurée « L_mes » par le dispositif 28 de mesure avec la hauteur réelle « L_réel » pour chaque chariot C1-C3.
Lx_réel = ax * Lx_mes + bx,
avec x = 1 pour le chariot C1, 2 pour le chariot C2 ou 3 pour le chariot C3, et ax = (Cx_P2réel - Cx_P1réel)/(Cx_P2mes - Cx_P1mes),
bx = Cx_P1réel - ax * Cx_P1mes.

Ce processus de calibration a donc pour but de déterminer les coefficients ax et bx pour chacun des chariots C1, C2 et C3.

La Figure 9 montre le dispositif 10 selon l'invention manipulé par un opérateur 51 pour mesurer le développé de la roue 1 installé sur un véhicule. On s'aperçoit que du fait de sa compacité, le dispositif 10 est facilement transportable pour effectuer les mesures de développé d'une roue d'un véhicule à l'autre.

**Revendications**

1. Dispositif (10) pour mesurer un développé (D) d'une roue (1) installée sur un véhicule,

   - la roue (1) comportant une jante (3) et un pneu (2) positionné autour de la jante (3) soumis à un effort vertical ($F_Z$) lié au poids du véhicule, **caractérisé en ce qu'**il comporte :
   - des moyens (16) de fixation comportant au moins deux tiges destinées à venir en appui contre la périphérie interne de la jante (3) de la roue pour assurer la fixation du dispositif (10) à la roue, et
   - des moyens (28, 37) pour mesurer le développé (D) à partir de la position (h1, h2) par rapport au sol (5) des tiges (17.1, 17.2, 21).

2. Dispositif selon la revendication 1, **caractérisé en ce que**

   - les moyens (16) de fixation comportent au moins trois tiges (17.1, 17.2, 21) délimitant un triangle inscrit à l'intérieur de la périphérie interne de la jante (3),
   - les moyens (28, 37) pour mesurer mesurant le développé (D) à partir de la position (h1, h2) par rapport au sol (5) des tiges (17.1, 17.2, 21) formant les sommets du triangle.

3. Dispositif selon la revendication 2, **caractérisé en ce que** le triangle délimité par les tiges (17.1, 17.2, 21) est un triangle isocèle ayant une base (47) destinée à être parallèle au sol (5).

4. Dispositif selon la revendication 2 ou 3, **caractérisé en ce qu'**il comporte :

   - un bâti (11) comportant au moins un rail (14.1, 14.2) vertical,
   - les moyens (16) de fixation étant formés par au moins deux chariots (C1, C2) sensiblement horizontaux aptes à coulisser le long du rail (14.1, 14.2) comportant respectivement une (21) et deux tiges (17.1, 17.2),
   - un système (28) de mesure pour mesurer la position (h1, h2) des chariots (C1, C2) par rapport au sol (5), et
   - des moyens (37) de calculs adapter pour calculer le développé de la roue (1) à partir de la position (h1, h2) mesurée des chariots (C1, C2) par rapport au sol (5).

5. Dispositif selon la revendication 4, **caractérisé en ce qu'**il comporte en outre un troisième chariot (C3) comprenant une tige (26) apte à reposer par gravité sur le haut du pneu (2) de la roue (1), les moyens (37) de calculs étant alors adaptés pour calculer le développé de la roue (1) en tenant compte de la position (h3) dudit troisième chariot (C3) par rapport au sol (5).

6. Dispositif selon la revendications 4 ou 5, **caractérisé en ce que** le système (28) de mesure de la position des chariots (C1, C2, C3) est formé notamment par un capteur de position unique en relation avec un patin (29) apte à coulisser le long d'une glissière verticale (31).

7. Dispositif selon la revendication 6, **caractérisé en ce que** le système de mesure comporte un interrupteur (33) déclenchant la mesure de position lorsqu'il est activé par des plots (34) solidaires des chariots (C1, C2, C3).

8. Dispositif selon l'une des revendications 1 à 7, **caractérisé en ce que** le premier chariot (C1) est associé à un moyen élastique, tel qu'un ressort (18), ayant tendance à repousser ledit premier chariot (C1) vers le bas lorsque le moyen élastique est compressé.

9. Dispositif selon l'une des revendications 1 à 8, **caractérisé en ce que** le deuxième chariot (C2) est associé à un moyen élastique, tel qu'un ressort (23) ayant tendance à repousser ledit deuxième chariot (C2) vers le haut lorsque le moyen élastique est compressé.

10. Dispositif selon l'une des revendications 1 à 9, **caractérisé en ce que** le moyen (37) de calcul comporte un microprocesseur (38), une mémoire (39) de données, une mémoire (41) de programmes et une interface (45) homme-machine.

**11.** Procédé de mesure d'un développé d'une roue (1) installée sur un véhicule mettant en oeuvre le dispositif (10) selon l'une des revendications 1 à 10, **caractérisé en ce que** pour mesurer le développé,

- on positionne les tiges (17.1, 17.2, 21) des moyens (16) de fixation en appui contre la périphérie interne de la jante (3) de la roue (1) pour assurer la fixation du dispositif (10) à la roue (1), et
- on mesure le développé (D) à partir de la position (h1, h2) par rapport au sol (5) des tiges (17.1, 17.2, 21).

**12.** Procédé selon la revendication 11, **caractérisé en ce que** les tiges délimitant un triangle inscrit à l'intérieur de la périphérie interne de la jante (3), on mesure le développé (D) à partir de la position (h1, h2) par rapport au sol (5) des tiges (17.1, 17.2, 21) formant les sommets du triangle.

**13.** Procédé selon la revendication 12, **caractérisé en ce que** pour mesurer le développé de la roue :

- on calcule un rayon ($R_{dyn}$) équivalent correspondant au cercle (7) dont le périmètre est égal au périmètre de la roue (1) en fonction du rayon de la roue sous charge ($R_S$) correspondant à la hauteur de l'axe (O) de la roue (1) par rapport au sol (5) et le cas échéant du rayon libre ($R_0$) de la roue (1) suivant lequel la roue (1) ne subit aucune contrainte, et
- on calcule le développé (D) de la roue (1) à partir du périmètre du cercle du rayon ($R_{dyn}$) équivalent en faisant éventuellement intervenir un coefficient (Gi) de glissement de la roue (1) sur le sol (1).

**14.** Procédé selon la revendication 13, **caractérisé en ce que** les moyens de fixation étant formé par un premier (C1) et un deuxième (C2) chariot portant respectivement une et deux tiges (17.1, 17.2, 21), on calcule le rayon ($R_S$) de la roue sous charge à partir de la position ($h_1$, $h_2$) du premier (C1) et du deuxième (C2) chariot par rapport au sol (5).

**15.** Procédé selon la revendication 13 ou 14, **caractérisé en ce que** le troisième chariot (C3) comprenant une tige (26) reposant sur le haut du pneu (2) de la roue (1), on mesure en outre le rayon libre (R0) de la roue à partir de la position du troisième chariot (C3) et du rayon sous charge ($R_S$).

**Fig. 1**

**Fig. 2**

**Fig. 3**

**Fig. 4**

| ... |
|---|
| P0 : Etalonnage |
| P1 : Calcul Rs |
| P2 : Calcul Ro |
| P3 : Calcul Rdyn |
| P4 : Calcul développé |
| ... |

**Fig. 5**

**Fig. 6**

**Fig. 7**

**Fig. 8a**

**Fig. 8b**

**Fig. 9**

**EP 2 278 261 A1**

Europäisches
Patentamt

European
Patent Office

Office européen
des brevets

**RAPPORT DE RECHERCHE EUROPEENNE**

Numéro de la demande

EP 10 16 9413

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 2 785 988 A1 (PURGUETTE EDMOND [FR]) 19 mai 2000 (2000-05-19) * page 7, ligne 4-29; figures 1,2 * ----- | 1-15 | INV. G01B5/00 G01B5/02 G01B5/08 G01B21/10 |
| A | US 4 114 279 A (JOHNSON WINSTON O ET AL) 19 septembre 1978 (1978-09-19) * abrégé; figure 1 * ----- | 1-15 | |
| A | EP 1 726 912 A2 (MICHELIN SOC TECH [FR]) 29 novembre 2006 (2006-11-29) * alinéas [0001] - [0025]; figure 1 * ----- | 1-15 | |

DOMAINES TECHNIQUES
RECHERCHES (IPC)

G01B

Le présent rapport a été établi pour toutes les revendications

| Lieu de la recherche | Date d'achèvement de la recherche | Examinateur |
|---|---|---|
| Munich | 22 octobre 2010 | Dighaye, Jean-Luc |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

14

**ANNEXE AU RAPPORT DE RECHERCHE EUROPEENNE
RELATIF A LA DEMANDE DE BREVET EUROPEEN NO.**

EP 10 16 9413

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-10-2010

| Document brevet cité au rapport de recherche | | Date de publication | Membre(s) de la famille de brevet(s) | | Date de publication |
|---|---|---|---|---|---|
| FR 2785988 | A1 | 19-05-2000 | AUCUN | | |
| US 4114279 | A | 19-09-1978 | AUCUN | | |
| EP 1726912 | A2 | 29-11-2006 | FR | 2886401 A1 | 01-12-2006 |
| | | | JP | 2006335349 A | 14-12-2006 |
| | | | US | 2006288804 A1 | 28-12-2006 |

Pour tout renseignement concernant cette annexe : voir Journal Officiel de l'Office européen des brevets, No.12/82

EPO FORM P0460